# EUROPÄISCHE PATENTANMELDUNG

(11) **EP 2 759 404 A2**
(43) Veröffentlichungstag der Anmeldung: **30.07.2014**
(21) Anmeldenummer: 14162010.4
(22) Anmeldetag: 11.06.2008
(51) Int. Cl.: B32B 37/22, B32B 38/18, B27N 7/00

(54) **Verfahren und Vorrichtung zur dekorativen Beschichtung einer Platte**

(30) Priorität: 20.06.2007 DE 102007028822
(62) Teilanmeldung aus: 08760857.6
(71) Anmelder: Surface Technologies GmbH & Co. KG, 15837 Baruth (DE)
(72) Erfinder: Pankoke, Rene, 33613 Bielefeld (DE)
(74) Vertreter: Michalski Hüttermann & Partner Patentanwälte

(57) **Zusammenfassung**

Eine Verfahren zur dekorativen Beschichtung einer Platte, insbesondere einer Holzwerkstoffplatte umfasst die Schritte:
- Transport einer Platte (1) zu einer Beschichtungsstation;
- Zufuhr eines Dekorpapiers zu einer Druckmaschine (5) und Bedrucken des Dekorpapiers (7) ;
- Auflegen des bedruckten Dekorpapiers (7) auf die Platte (1);
- Beschichten des Dekorpapiers mit einer harzhaltigen Beschichtung, und
- Verpressen der Einheit aus Platte, Dekorpapier und harzhaltiger Beschichtung. Dadurch kann das Dekorpapiers im Rahmen des Beschichtungsvorganges abgestimmt auf die jeweilige Beschichtung bedruckt werden, so dass sich auch kleine Losgrößen effektiv fertigen lassen.

## Beschreibung

Aus der Holzwerkstoffbranche sind verschiedene Verfahren zur dekorativen Beschichtung von plattenförmigen Werkstoffen, z.B. Spanplatten, MDF-Platten oder HDF-Platten bekannt. Diese beschichteten Platten werden dann entweder als Basiswerkstoff für die Möbelherstellung, insbesondere Kastenmöbelherstellung, genutzt, oder z.B. als sogenannter Laminatfußboden in der Fußbodenindustrie verarbeitet.

Die DE 199 63 084 A1 offenbart ein Zierlaminat, das eine Platte als Basismaterial aufweist, die über eine Schicht aus härtbaren Harz mit einer Dekorpapierschicht verbunden ist. Auf der Dekorpapierschicht ist eine transparente Overlay-Schicht mit härtbaren Harz angeordnet. Bei der Herstellung des Zierlaminats wird eine Presse eingesetzt, die bei 150°C ungefähr 45 min Druck auf die Schichten ausübt. Dabei wird der Durchmesser der aufgedruckten Tintentröpfchen im Durchmesser bis zum sechsfachen vergrößert. Dieses Verfahren ist daher nur begrenzt für große Losgrößen einsetzbar.

Bei den heute bekannten Verfahren wird ein sogenanntes Dekorpapier mit einem dekorativen Muster, z.B. einer Nachbildung einer Holzmaserung oder auch einem Fliesenmuster für die Anwendung im Fußbodenbereich, bedruckt. Anschließend wird das so bedruckte Dekorpapier mit einem Harz, vorzugsweise einem Melaminharz, imprägniert und angetrocknet. In einem anschließenden Schritt wird das bedruckte und imprägnierte Papier auf eine Holzwerkstoffplatte verpresst. Bei diesem Pressvorgang kann z.B. eine sogenannte Kurztaktpresse oder auch eine kontinuierliche Doppelbandpresse zum Einsatz kommen, die aus den Anmeldungen DE 37 19 976 und EP 07 110 063.0 bzw. DE 20 2006 009 638.8 bekannt sind. Bei der Verpressung des imprägnierten Dekorpapiers auf der Platte reagiert das entsprechende Harz, vorzugsweise Melaminharz, aus. Man sagt auch, es kondensiert aus, so dass eine sehr widerstandfähige Oberfläche entsteht, die sich während des Pressvorgangs sehr fest mit der darunterliegenden Holzwerkstoffplatte verbindet. Im Falle von Laminatfußboden wird üblicherweise auf das imprägnierte Dekorpapier noch eine weitere Papierschicht aus einem dünnen, weißen, sogenannten Overlaypapier gelegt, welches mit Korundpartikeln (Aluminiumoxid Al O₂) durchsetzt ist, um die Kratzfestigkeit der Oberfläche zu erhöhen wegen der starken Beanspruchung durch Abrieb von Schuhen. Dafür ist die Rückseite üblicherweise nicht mit einem dekorativ bedruckten, sondern mit einem unbedruckten einfarbigen Papier versehen, welches z.B. mit einem günstigeren Phenolharz imprägniert ist und in der Presse ebenso aushärtet.

Im Anwendungsbereich für Möbeloberflächen sollen üblicherweise sowohl die Vorder- als auch die Rückseite dekorativ beschichtet werden, so dass hier meistens oben und unten ein dekorativ bedrucktes Dekorpapier, vorzugsweise mit Melaminharz imprägniert, zum Einsatz kommt.

Die Schwierigkeit in diesem Verfahren besteht darin, dass die Dekordrucker aufgrund ihrer großen Maschinen und schnellen und hohen Produktionsgeschwindigkeiten sowie ihrer langen Rüstzeiten möglichst große Mengen an einem konstanten Dekor drucken wollen, die Hersteller der dekorativ beschichteten Platten aber letztendlich eine möglichst flexible und kleine Losgröße von verschiedenen Dekoren herstellen möchten. Außerdem ist das oben genannte Verfahren kostenintensiv, da mit dem Drucken, dem Imprägnieren und dem Pressen nach der Herstellung des Papiers weitere drei Verfahrensschritte zur Herstellung des Endproduktes gemacht werden müssen.

Um diese oben dargestellten Schwierigkeiten zu beheben gibt es bereits Ansätze des sogenannten Direktdruckes auf Holzwerkstoffplatten. Hier wird mittels Rotationstiefdruck über eine Gummiwalze indirekt auf die Holzwerkstoffplatte ein dekoratives Muster aufgetragen, welches anschließend entweder mit UV-Lacken weiterbearbeitet wird (vgl. DE 20 2004 018 710 U1) oder auch mit einem Auftrag von Flüssigharz und einer anschließenden Verpressung in einer Kurztaktpresse oder einer kontinuierlichen Presse (DE 103 60 187.2 und DE 10 2004 014 819 A1) weiterverarbeitet wird.

Dennoch haben alle oben genannten Verfahren weiterhin den Nachteil der relativ geringen Flexibilität und hohen Rüstzeiten bei Wechsel von Dekoren.

Die vorliegende Erfindung löst dieses Problem, mit einem Verfahren mit den Merkmalen des Anspruches 1 und mit einer Vorrichtung mit den Merkmalen des Anspruches 8.

Erfindungsgemäß erfolgt die Zufuhr eines Dekorpapiers zu einer Druckmaschine und Bedrucken des Dekorpapiers im Rahmen des kontinuierlichen Beschichtungsvorganges, also parallel zu dem Transport der zu beschichtenden Platten. Dabei kommt also weiterhin bedrucktes Dekorpapier zur Anwendung, wobei allerdings das Dekorpapier in einem Verfahrensschritt direkt und abgestimmt auf die Produktionsgeschwindigkeit der Presse, sei es eine Taktpresse oder eine kontinuierliche Presse, bedruckt wird. Auf diese Art und Weise muss keine große Menge an Dekorpapier hergestellt und auf Rollen zur weiteren Verarbeitung aufgewickelt werden, sondern es kann immer genau die Menge im laufenden Prozess hergestellt werden, die auch direkt danach in der Presse verarbeitet wird.

In einer besonderen Ausführungsform der Erfindung ist die Druckmaschine als eine Digitaldruckmaschine mit Tintenstrahltechnologie ausgebildet. Hier wird über einen Tintenstrahlkopf, von dem mehrere Einheiten parallel nebeneinander angeordnet sind und je nach Anzahl der verschiedenen Farben beim Druck auch mehrere hintereinander angeordnet sind, im Durchlauf auf das Papier das gewünschte Dekor aufgedruckt. Es können dabei die identischen Farbpigmente verwendet werden, welche auch in der bekannten Rotationstiefdrucktechnologie zum Drucken auf Dekorpapier im Einsatz sind.

Mit dieser Ausbildungsform ist es möglich, nach jeder beliebigen Anzahl von verpressten Platten ohne Unterbrechung der Fertigung ein neues Dekor auf die nächste Platte zu bringen, so dass Losgrößen bis herunter auf Losgröße 1 ohne Unterbrechung der Production möglich sind.

Die Erfindung wird nachfolgend anhand mehrerer Ausführungsbeispiele mit Bezug auf die beigefügten Zeichnungen erläutert. Es zeigen:
- Figur 1: eine schematische Darstellung einer Vorrichtung zum dekorativen Beschichten einer Platte;
- Figur 2: eine Darstellung der mit der Vorrichtung beschichteten Platte;
- Figur 3: eine schematische Darstellung eines zweiten Ausführungsbeispieles einer erfindungsgemäßen Vorrichtung zur Beschichtung einer Platte,
- Figur 4: eine schematische Ansicht eines dritten Ausführungsbeispieles einer erfindungsgemäßen Vorrichtung zur Beschichtung einer Platte.

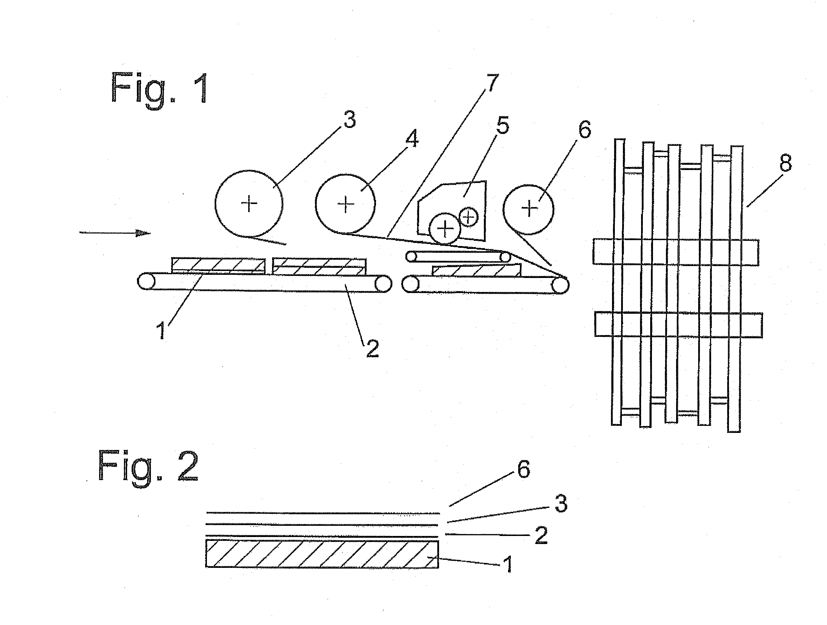

In Figur 1 werden hintereinander Platten 1, vorzugsweise Holzwerkstoffplatten, wie MDF-Platten, Spanplatten oder HDF-Platten, über eine Transporteinrichtung 2 einer Beschichtungsstation zugeführt. Oberhalb der Platten wird von einer Rolle 3 Underlay-Papier abgewickelt, das beispielsweise als beharztes Papier oder als Flüssigharz eine Untergrundbeschichtung auf den Platten 1 bildet.

Für die dekorative Beschichtung der Platte ist ein einfarbiges Dekorpapier 4 vorgesehen, das trocken von einer Rolle abgewickelt wird, wobei es auch gegebenenfalls imprägniert oder vorbeharzt sein kann. Das Dekorpapier 4 kann vorzugsweise weiss, grau beige oder in einem andern einfarbigen leicht zu bedruckenden Farbton gehalten sein. Das abgewickelte Papier 4 wird in einer Bahn 7 einer Druckmaschine 5 zugeführt. Die Druckmaschine 5 kann als Rotationstiefdruckmaschine oder als digitale Druckmaschine ausgebildet sein und kann Papierbahnen mit einer Geschwindigkeit von etwa 1 m/s bedrucken. Im Bereich der Druckmaschine 5 ist die Bahn 7 aus Dekorpapier beabstandet von der Platte 1 angeordnet, das heißt die Förderung der Bahn 7 aus Dekorpapier ist unabhängig von der Förderung der Platten 1.

Nach der Druckmaschine 5 wird das Dekorpapier auf eine Platte 1 aufgetragen und vorher gegebenenfalls auf die erforderliche Länge geschnitten. Es ist auch möglich, das Dekorpapier 7 bahnenförmig aufzutragen. Ferner wird ein beharztes Papier von einer Rolle 6 abgewickelt und entweder auf das Dekorpapier 7 oder auf die bereits mit dem Dekorpapier beschichtete Platte 1 oben aufgelegt. Das beharzte Papier weist eine hohe Abriebsfestigkeit auf und wird meist mit Korund beschichtet, um eine Beschädigung der Oberfläche zu vermeiden.

Die Einheit aus Platte 1 und Dekorpapier 3, gegebenenfalls mit dem Underlay-Papier 2 sowie dem Overlay-Papier 6 wird einer Presse 8 zugeführt, die als Kurztaktpresse oder als Doppelbandpresse ausgebildet ist. Wenn eine Doppelbandpresse zum Einsatz kommt, kann der Schneidvorgang der Bahn aus Dekorpapier 7 auch noch nach dem Verpressen erfolgen. Bei einer Kurztaktpresse muss das Dekorpapier 7 vorher geschnitten werden.

In der Presse 8 wird die beschichtete Platte 1 verpresst und gegebenenfalls verprägt, wobei die Oberfläche 6 mit einer dreidimensionalen Struktur versehen werden kann, beispielsweise um Holzporen, Fliesenstreifen oder andere Formen auf der Oberfläche nachzubilden.

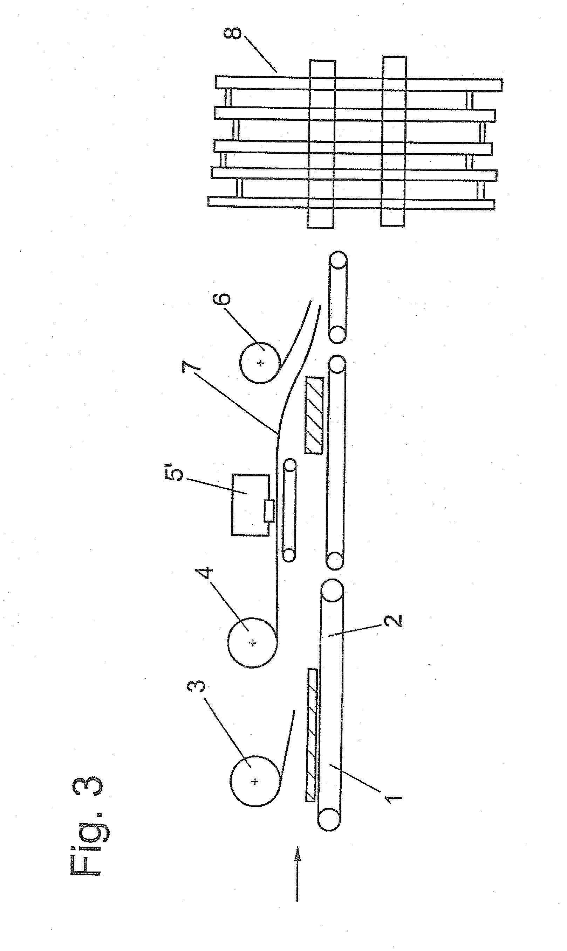

In Figur 3 ist eine alternative Ausführungsform einer erfindungsgemäßen Vorrichtung zur Beschichtung einer Platte dargestellt, wobei wesentlicher Unterschied die Ausbildung der Druckmaschine 5' als Digitaldruckmaschine ist. Der Druckkopf erstreckt sich dabei über die gesamte Breite der Bahn 7 aus einfarbigem Dekorpapier.

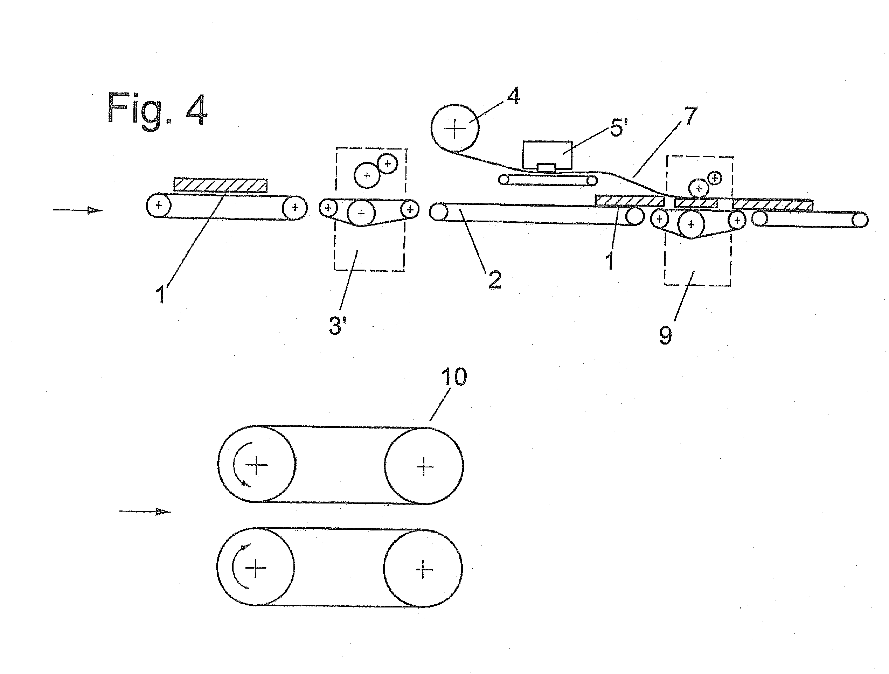

In Figur 4 ist eine weitere Ausführungsform einer erfindungsgemäßen Vorrichtung zur Beschichtung einer Platte dargestellt. Statt der Station 3 zum Auftragen eines Underlay-Papiers ist bei dieser Ausführungsform eine Beschichtungsstation 3' vorgesehen, die die Platte 1 aus Holzwerkstoff mit einem Flüssigharz beschichtet. Die mit dem Flüssigharz beschichtete Platte 1 wird dann über Transporteinrichtungen 2 zu einer weiteren Beschichtungsstation geführt, wo die Bahn 7 aus bedrucktem Dekorpapier aufgetragen wird. Das Dekorpapier 7 ist wie bei dem zweiten Ausführungsbeispiel durch eine Digitaldruckmaschine 5' mit dem gewünschten Dekormuster bedruckt worden. Das bedruckte Dekorpapier 7 wird dann auf die Platte 1 aufgetragen und anschließend ist eine Station 9 zum Auftragen einer OverlayBeschichtung vorgesehen, die ein Flüssigharz auf das Dekorpapier 7 aufträgt. Dieses Flüssigharz kann mit Partikeln zur Erhöhung der Abriebfestigkeit versehen werden. Anschließend wird die Einheit aus Platte 1, Dekorpapier 7 sowie den Flüssigharzschichten zu einer Doppelbandpresse 10 zugeführt. In der Doppelbandpresse wird dann die Beschichtung der Platte 1 verpresst und gegebenenfalls verprägt, damit die Oberfläche der Platte eine dreidimensionale Struktur erhält. Nach der Doppelbandpresse 10 kann dann das Dekorpapier 7 zusammen mit den Platten 1 auf die gewünschte Länge geschnitten werden.

Durch den Einsatz einer Druckmaschine 5 bzw. 5' für das einfarbige Dekorpapier können mit der erfindungsgemäßen Vorrichtung auch kleine Losgrößen einfach hergestellt werden. Denn das Dekorpapier 7 kann individuell bedruckt werden, wobei zusätzlich der Vorteil für die Steuerung besteht, dass während des Druckvorganges die Information vorhanden ist, an welcher Stelle sich das Dekorbild in der Druckmaschine 5 bzw. 5' befindet. Insofern kann auf einfache Weise eine Steuerung erfolgen, so dass ein bestimmter Abschnitt des Dekorbildes mit der Vorderkante einer Platte 1 zusammentrifft. Es müssen keine Markierungen oder andere Elemente erfasst werden, um eine Ausrichtung des Dekorpapiers 7 auf die Platte 1 vornehmen zu können. Vielmehr kann die Druckmaschine 5 bzw. 5' die Lageinformation an die Steuerung der Station zum Beschichten des Dekorpapiers liefern.

In den gezeigten Ausführungsbeispielen wird das Dekorpapier benachbart zu den Platten bedruckt, aber in derselben Anlage, damit eine kontinuierliche Beschichtung durchgeführt werden kann. Es ist natürlich auch möglich, zunächst das Dekorpapier auf die Platte, ggfs mit der Underlay-Beschichtung aufzulegen und dort das Bedrucken des Dekorpapieres vorzunehmen. Nach dem Druckvorgang erfolgt dann der Auftrag des Overlay, um dann ein Verpressen, Prägen und Aushärten vorzunehmen.

## Patentansprüche

1. Verfahren zur dekorativen Beschichtung einer Platte, insbesondere einer Holzwerkstoffplatte, mit den folgenden Schritten:
- Transport einer Platte (1) zu einer Beschichtungsstation;
- Zufuhr eines Dekorpapiers zu einer Druckmaschine (5) und Bedrucken des Dekorpapiers (7);
- Auflegen des bedruckten Dekorpapiers (7) auf die Platte (1), wobei eine Steuerung erfolgt, damit ein bestimmter Abschnitt des Dekorbildes mit der Vorderkante der Platte (1) zusammentrifft;
- Beschichten des Dekorpapiers mit einer harzhaltigen Beschichtung, und
- Verpressen der Einheit aus Platte, Dekorpapier und harzhaltiger Beschichtung.

2. Verfahren nach Anspruch 1, **dadurch gekennzeichnet, dass** vor dem Auflegen des Dekorpapiers die Platte mit einer harzhaltigen Beschichtung versehen wird.

3. Verfahren nach Anspruch 1 oder 2, **dadurch gekennzeichnet, dass** die Beschichtung der Platte und/oder des Dekorpapiers über eine harzgetränkte Materialbahn erfolgt.

4. Verfahren nach einem der Ansprüche 1 bis 3, **dadurch gekennzeichnet, dass** das Bedrucken des Dekorpapiers über eine Rotationstiefdruckmaschine erfolgt.

5. Verfahren nach einem der Ansprüche 1 bis 4, **dadurch gekennzeichnet, dass** das Bedrucken über eine digitale Druckmaschine erfolgt.

6. Verfahren nach einem der Ansprüche 1 bis 5, **dadurch gekennzeichnet, dass** auf die Platte und/oder das Dekorpapier Flüssigharz aufgetragen wird.

7. Verfahren nach einem der Ansprüche 1 bis 6, **dadurch gekennzeichnet, dass** die Einheit aus Platte, Dekorpapier und restliche Beschichtung in einer Presse verpresst und mit einer dreidimensionalen Struktur verprägt und ausgehärtet wird.

8. Vorrichtung zur dekorativen Beschichtung einer Platte, insbesondere zur Beschichtung einer Holzwerkstoffplatte, mit einer Transporteinrichtung für die zu beschichtenden Platten (1), einer Zuführeinrichtung für Dekorpapier zum Zuführen des Dekorpapieres auf die Platten und einer Presse (10) zum Verpressen der beschichteten Platte, wobei eine Druckmaschine (5, 5') zum Bedrucken des Dekorpapiers vorgesehen ist, **dadurch gekennzeichnet, dass** eine Steuerung vorhanden ist, mittels der eine Ausrichtung des Dekorpapieres auf die Platte (1) vornehmbar ist.

9. Vorrichtung nach Anspruch 8, **dadurch gekennzeichnet, dass** die Druckmaschine hinter einer Abwickelstation für das Dekorpapier und vor der Zuführeinrichtung zum Beschichten des Dekorpapiers mit einer harzhaltigen Bahn oder Flüssigharz vorgesehen ist.

10. Vorrichtung nach Anspruch 8 oder 9, **dadurch gekennzeichnet, dass** die Druckmaschine als Digitaldruckmaschine ausgebildet ist.

11. Vorrichtung nach Anspruch 8 oder 9, **dadurch gekennzeichnet, dass** die Druckmaschine als Rotationstiefdruckmaschine ausgebildet ist.

12. Vorrichtung nach einem der Ansprüche 8 bis 11, **dadurch gekennzeichnet, dass** vor der Station zum Auflegen des Dekorpapiers auf die Platte eine Station zum Auftragen einer Untergrundbeschichtung, vorzugsweise Underlay-Papier oder Flüssigharz vorgesehen ist.

13. Vorrichtung nach einem der Ansprüche 8 bis 12, **dadurch gekennzeichnet, dass** die Presse als kontinuierliche Doppelbandpresse ausgebildet ist.

14. Vorrichtung nach einem der Ansprüche 8 bis 12, **dadurch gekennzeichnet, dass** die Presse als Kurztaktpresse ausgebildet ist.
